# EUROPEAN PATENT SPECIFICATION

(11) **EP 0 479 778 B1**
(45) Date of publication and mention of the grant of the patent: **15.09.1993**
(21) Application number: 89907326.6
(22) Date of filing: 21.06.1989
(51) Int. Cl.: B25J 15/00

(54) **ARRANGEMENT FOR HYDRAULICALLY OR PNEUMATICALLY OPERATED GRIPPING OR HOLDING DEVICE**
ANORDNUNG FÜR EINE HYDRAULISCH ODER PNEUMATISCH BETRIEBENE GREIF- ODER HALTEVORRICHTUNG
AGENCEMENT POUR UN DISPOSITIF DE SERRAGE OU DE PREHENSION A COMMANDES HYDRAULIQUES OU PNEUMATIQUES

(43) Date of publication of application: 15.04.1992
(73) Proprietor: HAUGS, Audun, N-5030 Landas (NO)
(72) Inventor: HAUGS, Audun, N-5030 Landas (NO)
(74) Representative: Bjerre, Nils B.J.
(86) International application number: NO8900063
(87) International publication number: WO9015696

(56) References cited:
- SE-B- 419 710
- US-A- 3 343 864
- US-A- 3 601 442
- US-A- 3 640 564
- US-A- 4 792 173
- US-A- 4 815 782

## Description

The present invention concerns an arrangement for an hydraulically or pneumatically operated gripping or holding device with attached gripping or holding parts. As an example, the arrangement is in the form of a so-called "robot hand" with two or more "robot fingers". Gripping and holding devices are adjustable from a bent gripping or holding mode to an extended release mode in relation to an object to be gripped or held, and vice versa.

The present invention will find general application as a gripping or holding device and more particularly as a robot hand which can be put to various uses in the field of technology. However, the invention is not limited to such technical applications, but can for instance also be used as a hand prosthesis by persons with a defective or missing hand.

Up to now, such a gripping or holding device has been based on electro-mechanical operation to produce the desired gripping and holding operations. Such known devices (pincers or the like) have been complicated and costly both as regards production and operation, and have therefore not received as wide an application as one might wish. It must also be said that such devices are particular sensitive to outside influences and therefore less suited to relatively "dirty" environments and in environments where the device may be affected by active fluids, etc. A further problem is that such devices depend on sensors for feedback from the gripping surface(s) to the governing system, particularly in cases where it is necessary to handle the object to be gripped or held carefully or gently.

The object of the present invention is to avoid the above problems by producing a relatively simple and reliable solution. As construction and mode of operation are simple, the solution may be applied to a wide range of fields. While aiming at avoiding special sensors, the aim is to produce an even and controlled action on the object to be gripped or held.

In US 4 815 782 is suggested a grapling device comprising an arm formed from a closed ended, inflatable tube of elastic material. The tube has a plurality of generally parallel, longitudinally spaced bands disposed therearound for limiting the radial distention of the arm when inflated. A longitudinally inelastic, laterally flexible band disposed on a surface of the arm causes the arm, when inflated to wrap around an object to be gripped. The extent of the inflation of the arm determines the gripping force and geometry of the device.

By using elastic tube material in combination with inelastic, laterally flexible band a main part of the inflating force is being used to expand or deform the elastic tube material and to bend the inelastic, laterally flexible band into a curved shape, whereas the gripping force of the grappling device, when being wrapped around an object to be gripped is reduced correspondingly. It is also a problem to provide an accurate gripping force without the use of special sensors.

According to the invention the arangement is characterised in that the first casing section and the partition section is made of soft and flexible material, and that the second casing section is made of rather rigid flexible material, incorporates the stiffening element, has a wall thickness more than 2-3 times thicker than the thickness of the first casing section respectively the partition section and has an axial lenght less than that of the first casing section, whereas the volume of the first casing chamber is substantially larger and by preference 4-5 times larger than the volume of the second casing chamber, and that the casing in its unloaded condition takes a position between maximally curved and maximally extended positions.

The characteristic features of the present invention and in particular that the axial lenght of the second casing is less than that of the first casing, gives the advantage over prior art that less effort is needed to adjust the gripper to the curved position. This means that a greater part of the force is left to grip the object and in addition that the gripping force is allowed to be set more accurately in practice.

In as much as a pressure medium containing a working chamber in connection with a relatively soft and flexible casing material has been chosen in connection with the invention, the invention imitates the properties of the human hand as far as skin, muscles, etc., are concerned, so that the arrangement can easily be adapted locally according to the surroundings, according to need. By using a flexible or articulated stiffening element inside the above-mentioned casing, it is possible in the same manner to imitate the properties of the human hand when it comes to joints, ligaments, tendons, etc., so that the arrangement can also adjusted with regard to rigidity and strenght.

With the help of the arrangement in the invention, it is possible to achieve a solution as regards construction and user properties which to a substantial degree can imitate the construction and workings of the human hand. In most instances where the human hand is to carry out a gripping, holding or lifting operation, it is not a question of moving each finger separately and one at a time, joint by joint, but rather of moving the fingers together in a common grip with the gripping force adjusted to the shape of the object to be gripped or held, with a more or less even squeezing force between each finger and the object to be gripped or held. All fingers will thus move at the same time towards a closed (flexed) mode or at the same time away from a closed mode towards a more extended mode. A similar effect is achieved in a simple manner with the help of the robot hand of this invention. In the closing movement for the robot hand, the bending of the robot fingers will cease as soon as the pressure of the part against the object has reached a certain level, governed by a corresponding movement of the parts of other robot fingers or other parts of the robot hand.

According to the invention, it is preferable for the above-mentioned pressure medium to be a common working pressure medium for the gripping and holding parts so as to carry out an evenly distributed squeezing force on each of the gripping and holding parts. In this way, it is possible in a simple manner to achieve an effect which by and large corresponds to the workings of a human hand when it is bent around an object that is to be gripped or held.

According to the invention, it is possible to use a common pressure medium source for all movements to be carried out by the gripping and holding device, including all possible separate movements which the individual gripping and holding part is to make in connection with its engagement with a common object that is to be gripped or held. Moreover, it is possible to use a simple, common governor (pressure governing device) to control the pressure in accordance with need or to reverse the connection between the pressure chamber(s) and the pressure medium source or the pressure relief source.

By designing the arrangement in the invention as an internally stiffened device similar to a rubber glove with a shape similar to or generally similar to a human hand, it is possible to obtain a handy tool which can act more or less like a closed hand when it is supplied with a pressure medium to an attached (first) chamber or as an open hand when the pressure medium is removed from the attached chamber. To assist the closing and opening movements of the device, it is possible to use a second chamber in connection with the first chamber and similarly to remove the pressure medium from a second chamber when the first chamber is supplied with pressure medium or supply pressure medium to the second chamber when pressure medium is removed from the first chamber.

Further characteristics of the invention will appear from the following description, which refers to the appended drawings, in which:
Fig. 1 shows a diagram of an arrangement in accordance with the invention, illustrated in connection a gripping and holding device imitating a human hand (robot hand).
Fig. 2 shows a side view and a partial cross section of a first design example of a gripping and holding part (robot finger part) forming part of the device as shown in fig. 1, in extended mode.
Fig. 3 shows the same as fig. 2 with the part shown in flexed mode.
Fig. 4 shows a cross-section of the part according to fig. 2.
Fig. 5 shows a drawing of a modification of a detail of the holding part corresponding to fig. 3.
Figs. 6, 7 and 8 show a second design example in outlines and sections corresponding to figs. 2, 3 and 4.

In the following, the arrangement will be described using hydraulic oil as a pressure medium, but it will be understood that with correspondingly adapted components, compressed air can be used as a pressure medium, and then generally with the same advantages.

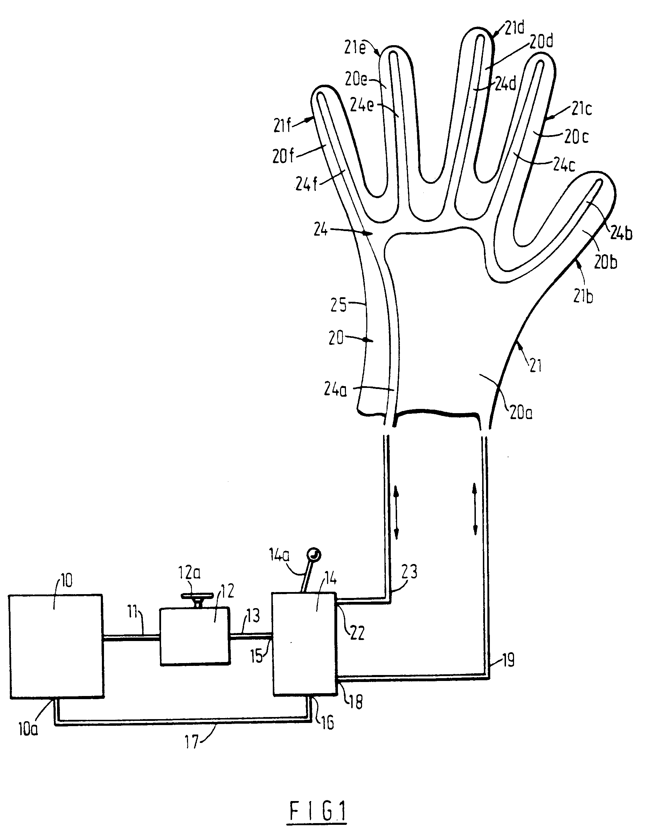

In fig. 1 a pressure medium source or a pressure medium reservoir 10 is shown with a pipe connection 11 to a pressure governor 12 and with a further pipe connection 13 from the pressure governor 12 to a four-way valve 14 inlet 15. From the valve 14, there is a pipe connection 17 from the relief outlet 16 back to the reservoir 10 through a pressure relief source as indicated at 10a. Furthermore, from a first valve outlet 18, there is a pipe connection 19 to a first working chamber 20 in a gripping and holding device which is shown in the form of a robot hand 21 with five robot fingers 21b-21f. From a second valve outlet 22 there is a pipe connection 23 to a second working chamber 24 in the robot hand 21. At 12a, there is a wheel to adjust the pressure of the medium in pressure governor 12 and at 14a there is a handle to control the supply of the pressure medium to or from outlets 18 and 22 and to control the amount of pressure medium to and from the outlets and the adjacent chambers 20 and 24.

The robot hand 21 is shown in fig. 1 with a robot hand casing 25 and is also shown with a chamber section 20a which imitates the palm and back of a hand and with five chamber sections imitating fingers 20b,20c,20d,20e,20f which communicate with each other and with the section 20a. Inside the chamber sections 20a-20f, i.e. inside a first chamber 20, there is a second chamber 24 with a hand chamber section 24a and five finger chamber sections 24b,24c,24d,24e,24f, communicating between themselves and with section 24a.

With the help of valve 14, it is possible to supply the device with a desired amount of pressure medium to the one chamber, for instance chamber 20, while at the same time a corresponding amount or a thereto adjusted amount of pressure medium is removed from the second chamber, i.e. chamber 24, and vice versa. One can hereby adjust the flexion or extension of the robot hand 21 according to need. The individual sections of the robot hand and robot fingers may be flexed separately to adjust to the shape of the object to be gripped or held, that is to say with an even distribution of the force on the individual sections as these are applied to and stop up against the individual local sections of the object. Similarly, by removing the pressure medium from the one chamber and supplying pressure medium to the other chamber it is possible to adjust the degree to which the robot hand and robot fingers are extended. The actual force exerted by the local sections of the robot hand can be controlled collectively by the governor 12.

In order to achieve the desired flexion or extension of the robot hand, it is necessary to have a special, controlled stiffening of the local areas of the robot hand.

In the following, such a stiffening is described in connection with a robot finger, but without showing this in detail, it is clear that the palm of the hand section 20a,24a of the robot hand may also be stiffened, possibly in extension of a stiffening of the various robot fingers. It is also possible to allow certain areas of the palm section 20a,24a to be immovably stiffened, while other areas of the palm section 20a,24a can be stiffened in a flexible fashion, corresponding to the finger sections.

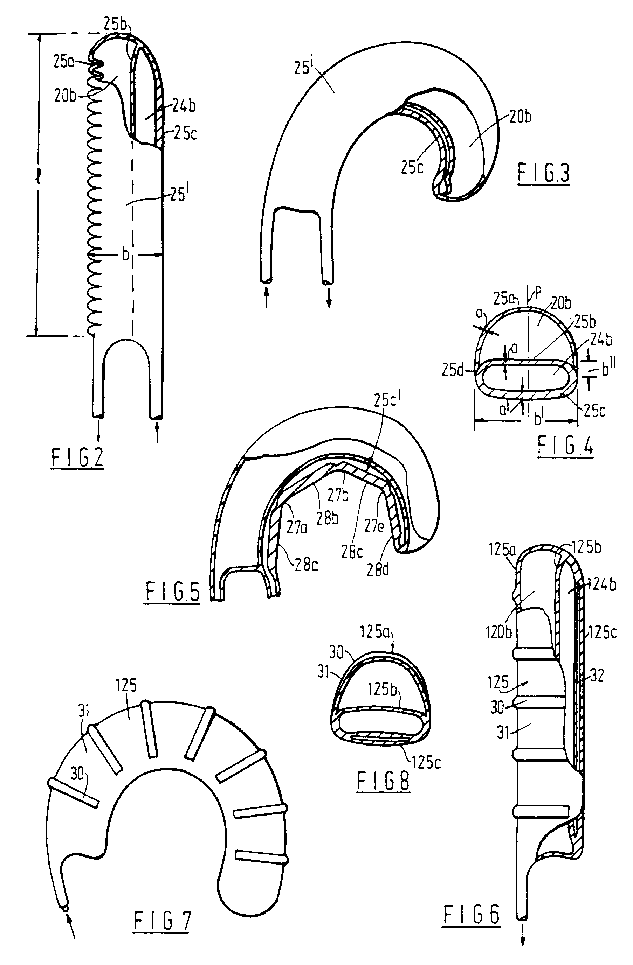

Figs. 2-4 show a first design example, showing an outer, soft and flexible casing 25'. The casing 25' is divided lengthwise into a longitudinal first chamber 20b with a relatively large volume and a longitudinal second chamber 24b with a smaller volume. The chamber 20b can, for instance, have a volume which is 4-5 times as large as the volume of chamber 24b. The back of the casing of the above-mentioned first chamber 20b is equipped with a soft, bellows-shaped casing section 25a, while on the opposite side, it is equipped with a flexible, soft section 25b forming a partition wall. The second chamber 24b is located between the first chamber 20b and the inside of the casing, where a flexible casing section 25c is shown. As shown in fig. 4, the casing section 25a, the partition section 25b and the casing section 25c are linked together through a connection area 25d with little width b". The casing section 25a and the partition section 25b have a thickness a which is less than 1/2 and preferably less than 1/3 of the thickness a' of the casing section 25c. More precisely, the casing section 25' has a thickness a' which is in the region of 1/10 to 1/20 of the width b' of the casing section 25c. In the design example shown, the casing 25' as shown in fig. 2 when under pressure, has a width b (generally corresponding to width b' of the casing section 25c) which is about 1/4 of the length of the casing l. In various design examples, the above-mentioned width may for instance vary between 1/3 and 1/10 of the length of the casing l. The relatively rigid but flexible casing section 25c extends along most of the length of the casing l and preferably with a more or less even thickness over the whole length and over the whole width, with the exception of the end edge sections and the side edge sections where the casing section 25c forms an evenly decreasing partition thickness at the transition to the adjacent casing sections. With the help of the transverse, relatively rigid flexible casing section 25c, but which has a bending plane P (fig. 4), a stiffening element is formed in casing 25'. This stiffening element is allowed to bend in the above-mentioned plane P (bending plane) as shown in fig. 4, but is prevented from bending in directions at right angles to the above-mentioned plan P.

It is also possible, in a modified design, for the casing section 25c', as shown in fig. 5, to be equipped with constricted sections 27a,27b,27c, forming swing-joints in certain sections of the casing section's 25c' length. In such instances the areas 28a,28b,28c,28d of the casing section 25c' adjacent to the constricted sections can be relatively rigid and have only a minimum of flexibility.

Fig. 2 shows the casing section 25a in a mode where the finger chamber 20b takes up a pressure relief position and where the casing section 25a has a bellows section shown in an axially collapsed mode. In this mode, the finger chamber 24b takes up its fully pressure-loaded mode, where the partition wall 25b and the casing section 25c are maximally extended both lengthwise and widthwise.

Fig. 3 shows the finger section 21b after pressure has been released from the finger chamber 24b and the partition section 25b has been pressed against the casing section 25c with the help of the pressure-loaded finger chamber 20b. In this mode the flexible casing section 25c as shown in fig. 3, (or the jointed casing section 25c' as shown in fig. 5) is bent over in a more or less C-shaped fashion, i.e. in a curve determined by the degree to which finger chamber 20b is filled and the degree to which finger chamber 24b is emptied.

Fig. 4 shows a cross-section of the casing 25 with a mean loading of both finger chamber 20b and finger chamber 24b.

The alternative design is dimensioned and constructed in a manner corresponding to that shown in fig. 2 to 4 and 5, but where the casing 125 is shown with a single finger chamber 120b, as the partition corresponding to partition 25b shown in figs. 2-4 has been omitted. In this design, the casing section 125a is shown with sectionally arranged, transverse ribs 30 and intermediate membrane-forming sections 31. In this instance, as shown in figs. 6 and 7, one obtains a bellows-like effect corresponding to that shown in figs. 2 and 3, but different in that a radial expansion is obtained only in sections 31 while the ribs 30 take on a stable form. With the help of an interactive effect between the flexible but otherwise rigid casing section 125c and the ribs 30, one obtains a similar joint-forming effect as shown at the constricted sections 27a,27b,27c in casing section 25c' in fig. 5. In the design example shown in figs. ,6-8, the casing section 125c is specially stiffened with a leaf spring 32 built into the casing section 125c, such spring extending over most of the length and width of the casing section 125c, as shown in fig. 8.

In the above-mentioned second design example, one achieves a flexion (fig. 7) or extension (fig. 6) of the casing 125 solely by loading pressure into or releasing pressure from finger chamber 120b. This is ensured by the fact that the leaf spring 32 allows the illustrated bending or flexing of casing section 125c by loading pressure into the finger chamber 120b, while releasing pressure from the finger chamber 120b ensures the return of the casing section to the position shown in fig. 6.

Instead of attaching the leaf spring 32 as shown, i.e. imbedded into casing section 125c, it is possible, for instance, to attach the leaf spring to casing section 125c only at the ends and otherwise allowing the leaf spring to move freely inside the finger chamber 120b. In such instance, it is possible to design the casing section 125c between the points at which the leaf spring is attached using a softer wall material or a wall material which will take on a bellows-like form, with less wall thickness, so that this may be folded or creased where the backing so requires.

Even though concrete design examples for this are not shown herein, it is self-evident that the above solutions may be combined in different ways to obtain the desired local rigidity and strength or the desired local flexibility and softness. Thus one here has the possibility of imitating the workings and the appearance of a human hand both with a view to general technical applicability and with a view to its use as a hand prosthesis.

## Claims

1. The arrangement of an hydraulically or pneumatically operated gripping and holding device with attached gripping and holding parts, i.e. a so-called "robot hand" (21) with two or more "robot fingers" (21a,21c,21d,21e,21f), which is adjustable from a curved gripping and holding position to an extended release position in relation to an object which is to be gripped and/or held, and vice versa, each gripping or holding part comprising a casing (25,125) comprising a first casing section (25a,125a) and a second casing section (25c,125c) and an intermediate partition section (25b,125b) and a stiffening element (24,25c, 125c,32) incorporated in said casing, said casing (25,125) being devided in a first casing chamber (20,20b,120b) between said first casing section and said partition section and a second casing chamber (24,24b,124b) between said second casing section and said partition section, whereas each casing chamber via a regulator (12) separately communicate with a pressure medium charging source and a pressure medium release source, for alternate loading of pressurised medium in one of said chambers and unloading of pressurised medium from the other one of said chambers, and vice versa, characterised in that the first casing section (25a,125a) and the partition section (25b,125b) is made of soft and flexible material, and that the second casing section (25c,125c) is made of rather rigid flexible material, incorporates the stiffening element (24,25c,125c,32), has a wall thickness (a') more than 2-3 times thicker than the thickness (a) of the first casing section (25a,125a) respectively the partition section (25b, 125b) and has an axial lenght less than that of the first casing section (25a,125a), whereas the volume of the first casing chamber (20,20b, 120b) is substantially larger and by preference 4-5 times larger than the volume of the second casing chamber (24,24b, 124b), and that the casing (25,125) in its unloaded condition takes a position between maximally curved and maximally extended positions.

2. The arrangement in accordance with claim 1, characterised in that the second casing chamber (24b,124b) is located between the first casing chamber (20b,120b) and the stiffening element (25c,125c,32).

3. The arrangement in accordance with claim 1 or 2, characterised in that the main portion of the casing located at the rear side of the casing has a substantially greater lenght than the gripping and holding face thereof, which face is located opposite said rear side of the casing.

4. The arrangement in accordance with one of claims 1 to 3, characterised in that the stiffening element forms a partition wall between the first and second casing chambers.

5. The arrangement in accordance with one of claims 1 to 4, characterised in that the back of the portion (25a,125a) of the casing is bellow-shaped.

6. The arrangement in accordance with one of claims 1 to 4, characterised in that the stiffening element (25c') is joint-shaped.

## Patentansprüche

1. Anordnung für eine hydraulisch oder pneumatisch betriebene Greif- oder Haltevorrichtung mit daran befestigten Greif- oder Halteteilen, das heißt eine sogenannte "Roboterhand" (21) mit zwei oder mehreren "Roboterfingern" (21a,21c,21d,21e,21f), die in bezug auf ein zu greifendes und/oder zu haltendes Objekt aus einer gekrümmten Greif- und Halteposition in eine gestreckte Freigabeposition einstellbar ist und umgekehrt, wobei jedes Greif- oder Halteteil ein Gehäuse (25,125) mit einer ersten Gehäusesektion (25a,125a) und einer zweiten Gehäusesektion (25c,125c) und einer dazwischenliegenden Trennsektion (25b,125b) und einem in das Gehäuse eingegliederten Versteifungselement (24,25c,125c,32) aufweist, wobei das Gehäuse (25,125) in eine erste Gehäusekammer (20,20b,120b) zwischen der genannten ersten Gehäusesektion und der genannten Trennsektion und eine zweite Gehäusekammer (24,24b,124b) zwischen der genannten zweiten Gehäusesektion und der Trennsektion unterteilt ist, während jede Gehäusekammer über einen Regler (12) separat mit einer Druckmedium-Ladequelle und einer Druckmedium-Entladequelle kommuniziert, nämlich alternierend zum Laden eines Druckmediums in eine der genannten Kammern und zum Entladen eines Druckmediums aus der anderen der genannten Kammern und umgekehrt, ***dadurch gekennzeichnet***, daß die erste Gehäusesektion (25a,125a) und die Trennsektion (25b,125b) aus weichem und flexiblem Material hergestellt ist und daß die zweite Gehäusesektion (25c,125c) aus einem ziemlich harten flexiblen Material hergestellt ist, das Versteifungselement (24,25c,125c,32) eingliedert, eine mehr als zwei- bis dreimal größere Wanddicke (a 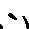 ) als jene (a) der ersten Gehäusesektion (25a,125a) bzw. der Trennsektion (25b,125b) besitzt und eine axiale Länge aufweist, die kleiner ist als jene der ersten Gehäusesektion (25a,125a), während das Volumen der ersten Gehäusekammer (20,20b,120b) wesentlich und vorzugsweise vier- bis fünfmal größer ist als das Volumen der zweiten Gehäusekammer (24,24b,124b), und daß das Gehäuse (25,125) im unbeladenen Zustand eine Position zwischen einer maximal gekrümmten Position und einer maximal gestreckten Position einnimmt.

2. Anordnung nach Anspruch 1, ***dadurch gekennzeichnet***, daß sich die zweite Gehäusekammer (24b,124b) zwischen der ersten Gehäusekammer (20b,120b) und dem Versteifungselement (25c,125c,32) befindet.

3. Anordnung nach Anspruch 1 oder 2, ***dadurch gekennzeichnet***, daß der auf der Rückseite des Gehäuses befindliche Hauptbereich des Gehäuses eine wesentlich größere Länge als seine Greif- und Haltefläche aufweist, welche sich der Rückseite des Gehäuses gegenüberliegend befindet.

4. Anordnung nach einem der Ansprüche 1 bis 3, ***dadurch gekennzeichnet***, daß das Versteifungselement eine Trennwand zwischen der ersten und zweiten Gehäusekammer bildet.

5. Anordnung nach einem der Ansprüche 1 bis 4,***dadurch gekennzeichnet***, daß die Rückseite des Bereichs (25a,125a) des Gehäuses blasebalgförmig ausgebildet ist.

6. Anordnung nach einem der Ansprüche 1 bis 4, ***dadurch gekennzeichnet***, daß das Versteifungselement (25c 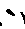 ) gelenkförmig ausgebildet ist.

## Revendications

1. Agencement d'un dispositif de préhension ou de tenue actionné de manière hydraulique ou pneumatique avec des éléments de préhension ou de tenue qui y son liés, c'est-à-dire ce qu'on appelle une "main de robot"(21) avec deux, ou plus, "doigts de robot" (21a, 21c, 21d, 21e, 21f), qui est réglable entre une position de préhension ou de tenue, repliée, et une position relâchée, étendue, par rapport à un objet à prendre ou à tenir, et vice versa, chaque élément de préhension ou de tenue étant constitué d'une enveloppe (25, 125), comprenant une première section d'enveloppe (25a, 125a), une seconde section d'enveloppe (25c, 125c) et une section de séparation intermédiaire (25b, 125b), et un élément raidisseur (24, 25c, 125c, 32) incorporé dans ladite enveloppe, ladite enveloppe (25, 125) étant divisée en une première chambre d'enveloppe (20, 20b, 120b) située entre ladite première section d'enveloppe et ladite section de séparation et une seconde chambre d'enveloppe (24, 24b, 124b) située entre ladite seconde section d'enveloppe et ladite section de séparation, tandis que chaque chambre d'enveloppe communique séparément, par l'intermédiaire d'un régulateur (12), avec une source de délivrance d'un milieu sous pression et une source de décharge de milieu sous pression, pour de façon alternée charger le milieu sous pression dans l'une desdites chambres et décharger le milieu sous pression de l'autre desdites chambres, et vice versa, **caractérisê en ce que** la première section d'enveloppe (25a, 125a) et la section de séparation (25b, 125b) sont faites d'une matière molle et flexible, et en ce que la seconde section d'enveloppe (25c, 125c) est faite d'une matière flexible plutôt rigide, incorpore l'élément raidisseur (24, 25c, 125c, 32), a une épaisseur de paroi (a') plus de deux à trois fois plus épaisse que l'épaisseur (a) de la première section d'enveloppe (25a, 125a) et respectivement de la section de séparation (25b, 125b), et a une étendue axiale inférieure à celle de la première section d'enveloppe (25a, 125a), tandis que le volume de la première chambre d'enveloppe (20, 20b, 120b) est sensiblement plus grand, et de préférence quatre à cinq fois plus grand, que le volume de la seconde chambre d'enveloppe (24, 24b, 124b), et en ce que l'enveloppe (25, 125) à l'état libre prend une position entre des positions repliée au maximum et étendue au maximum.

2. Agencement selon la revendication 1, caractérisé en ce que la seconde chambre d'enveloppe (24b, 124b) est située entre la première chambre d'enveloppe (20b, 120b) et l'élément raidisseur (25c, 125c, 32).

3. Agencement selon la revendication 1 ou 2, caractérisé en ce que la partie principale de l'enveloppe située du côté arrière de l'enveloppe à une longueur sensiblement plus grande que sa face de préhension et de tenue, laquelle face est située à l'opposé dudit côté arrière de l'enveloppe.

4. Agencement selon l'une des revendications 1 à 3, caractérisé en ce que l'élément raidisseur forme une paroi de séparation entre les première et seconde chambres d'enveloppe.

5. Agencement selon l'une des revendications 1 à 4, caractérisé en ce que l'arrière de la partie (25a, 125a) de l'enveloppe a la forme d'un soufflet.

6. Agencement selon l'une des revendications 1 à 4, caractérisé en ce que l'élément raidisseur (25c') est de forme articulée.
